**Europäisches Patentamt**

**European Patent Office**

**Office européen des brevets**

(19)

(11) Veröffentlichungsnummer : **0 330 648 B1**

(12)

# EUROPÄISCHE PATENTSCHRIFT

(45) Veröffentlichungstag der Patentschrift :
30.12.92 Patentblatt 92/53

(51) Int. Cl.$^5$ : **F24D 3/08, F24D 12/02**

(21) Anmeldenummer : **89890047.7**

(22) Anmeldetag : **21.02.89**

(54) **Heizungsanordnung mit mindestens einer Heizvorrichtung für ein Trägermedium.**

(30) Priorität : **23.02.88 AT 432/88**

(43) Veröffentlichungstag der Anmeldung :
**30.08.89 Patentblatt 89/35**

(45) Bekanntmachung des Hinweises auf die
Patenterteilung :
**30.12.92 Patentblatt 92/53**

(84) Benannte Vertragsstaaten :
**AT BE CH DE ES FR GR IT LI NL SE**

(56) Entgegenhaltungen :
**EP-A- 0 109 002**
**EP-A- 0 990 875**
**FR-A- 2 540 227**

(73) Patentinhaber : **C.M.E. SCHWARZ**
**HOLDINGGESELLSCHAFT M.B.H.**
**Schwendter Strasse 28**
**A-6382 Kirchdorf (AT)**

(72) Erfinder : **Schwarz, Alois**
**Schwendter Strasse 28**
**A-6382 Kirchdorf (AT)**

(74) Vertreter : **Atzwanger, Richard, Dipl.-Ing.**
**Mariahilfer Strasse 1c**
**A-1060 Wien (AT)**

**Beschreibung**

Die Erfindung betrifft eine Heizungsanordnung mit mindestens einer Heizvorrichtung für ein Trägermedium, z.B. einem durch Öl oder Gas betriebenen Heizungskessel, einer Wärmepumpe und einem Feststoffbrenner, weiters mit einer Förderpumpe für das Trägermedium, mit einem Wärmetauscher, mit im Heizungskreis angeordneten Verbrauchern, wie Heizungsradiatoren, und mit mindestens einem Boiler für Brauchwasser, welches mittels des Wärmetauschers aufheizbar ist, wobei sich einer der Leitungszweige des Wärmetauschers im Kreislauf der Heizvorrichtung befindet.

Bei bekannten mit Heizvorrichtungen versehenen Heizungsanordnungen ist nicht berücksichtigt, daß zwar durch Öl oder Gas betriebene Brenner innerhalb kürzester Zeit ein- und ausgeschaltet werden können, daß jedoch Feststoffbrenner eine relativ große Einschaltzeit bzw. ebenso eine relativ große Nachheizzeit aufweisen und daß Wärmepumpen durch oftmaliges Ein- und Ausschalten funktionsunfähig werden. Aus diesem Grund wird durch Feststoffbrenner den Betriebsanforderungen deshalb nicht entsprochen, da bei der Anforderung von Wärme durch die Verbraucher diese nicht unmittelbar geliefert werden kann bzw. dann, wenn von den Verbrauchern keine Wärme mehr benötigt wird, diese vom Feststoffbrenner weiterhin geliefert wird, wodurch Energieverluste bedingt werden. Wärmepumpen sind deshalb nur beschränkt einsetzbar, da sie nur über längere Zeiträume eingeschaltet bzw. ausgeschaltet werden dürfen, soferne die angestrebte Standzeit erzielt werden soll.

Der gegenständlichen Erfindung liegt demnach die Aufgabe zugrunde, eine Heizungsanordnung zu schaffen, welche es ermöglicht, neben einem durch Öl oder Gas betriebenen Heizungskessel auch eine Wärmepumpe und bzw. oder auch einen durch Feststoff beheizten Kessel zur Erhitzung des Trägermediums einzusetzen, ohne daß hiedurch aufgrund der diesen anhaftenden Nachteile im Betrieb der Heizungsanordnung Schwierigkeiten bedingt werden.

Aus der EP-A 099 875 ist eine Heizungsanordnung bekannt, welche die vorstehend angeführten Bestandteile aufweist. Da dabei ein im Kreislauf des Heizungskreises angeordneter Wärmetauscher innerhalb des Boilers für Gebrauchswasser angeordnet ist, kann durch den Heizungskreis auch Gebrauchswasser erhitzt werden. Aufgrund der Tatsache allerdings, daß sich dieser Wärmetauscher im unteren Bereich des Boilers befindet und den technischen Gegebenheiten entsprechend das Kaltwasser im Bodenbereich des Boilers zugeleitet und das Heißwasser im oberen Bereich des Boilers entnommen wird, ist es zwar möglich, das im Boiler befindliche kalte Wasser zu erhitzen und aus diesem heißes Wasser zu entnehmen. Es ist hingegen nicht möglich, das im Boiler befindliche heiße Wasser als Wärmequelle für den Betrieb der Heizungsanordnung bzw. zur Speisung der in der Heizungsanordnung befindlichen Verbraucher heranzuziehen.

Demgegenüber wird die der gegenständlichen Erfindung zugrundeliegende Aufgabe dadurch gelöst, daß der Boiler einen Wärmespeicher bzw. einen Wärmepuffer für die Heizungsanordnung bildet, wodurch das im Boiler befindliche Heißwasser als zusätzliche Wärmequelle für die Speisung der im Heizungskreis befindlichen Verbraucher herangezogen werden kann. Dies wird bei einer Heizanordnung, bei welcher sich der eine Leitungszweig des Wärmetauschers im Kreislauf der Heizungsvorrichtung befindet, erfindungsgemäß dadurch erzielt, daß sich der andere Leitungszweig im Boilerkreislauf befindet und daß dessen beiden Leitungen einerseits im oberen und andererseits im unteren Bereich des Boilers münden, wobei im anderen Leitungszweig vorzugsweise ein Umsteuerventil angeordnet ist.

Durch diese Ausbildung kann bei Betrieb der Heizvorrichtung im Kreislsauf der Heizungsanordnung befindliche Wärmeenergie über den Wärmetauscher an den Boiler abgegeben und in diesem gespeichert werden. Sobald nach Abschaltung der Heizvorrichtung im Heizungskreis Wärmeenergie benötigt wird, wird das im Boiler befindliche heiße Wasser aus diesem in umgekehrter Richtung heraus gefördert, wodurch es seine Wärme über den in der Heizungsanordnung befindlichen Wärmetauscher an den Haizungskreis abgibt. Hierdurch wird die im Boiler befindliche Wärmeenergie zur Speisung der Wärmeverbraucher herangezogen. Sobald auch in dem als Puffer bzw. Speicher dienenden Boiler keine Wärme zur Verfügung steht, muß wiederum mindestens eine der Heizvorrichtungen in Betrieb genommen werden, worauf wiederum sowohl die Verbraucher als auch der Boiler mit Wärmeenergie gespeist werden.

Ein weiterer Vorteil dieses Systems besteht darin, daß auf diese Weise ein oftmaliger Austausch des im Boiler befindlichen Heißwassers erfolgt. Dies ist deshalb erforderlich, da festgestellt wurde, daß sich in diesem bei Temperaturen unterhalb von 55°C innerhalb eines Zeitraumes von 24 Stunden schädliche Bakterien bilden. Aus diesem Grunde ist es erforderlich, das in einem Boiler befindliche Wasser entweder periodisch auf Temperaturen über 55°C zu erhitzen oder für einen oftmaligen Austausch des in diesem befindlichen Heißwassers Sorge zu tragen. Bei der erfindungsgemäßen Anlage werden beide diese Maßnahmen bewirkt.

Vorzugsweise ist im Boilerkreislauf eine weitere Förderpumpe vorgesehen. Soferne im Boilerkreislauf ein Umsteuerventil vorgesehen ist, so kann dieses als Vierwegventil ausgebildet sein, an welches einerseits die zum anderen Leitungszweig des Wärmetauschers und andererseits die zum Boiler führenden Leitungen angeschlossen sind.

Nach einer weiteren zweckmäßigen Ausführungsform sind im Boilerkreislauf zwei miteinander über ein weiteres Umsteuerventil miteinander verbundene Boiler angeordnet. Dabei kann der mindestens eine Boiler in an sich bekannter Weise zudem auch mittels mindestens einer weiteren Wärmequelle, z.B. einer Solarheizung, aufheizbar sein.

Vorzugsweise ist die Heizvorrichtung durch die Kombination eines Öl- bzw. Gasbrenners mit einer Wärmepumpe und mit einem Feststoffbrenner gebildet, deren Vorlaufleitungen und Rücklaufleitungen jeweils an eine Vorlaufsammlerleitung und an eine Rücklaufsammlerleitung angeschlossen sind. Zudem können in der Vorlaufleitung vor und nach dem Wärmetauscher vorzugsweise motorisch gesteuerten Mehrwegventile vorgesehen sein, von welchen jeweils ein Anschluß zur Rücklaufleitung geführt ist.

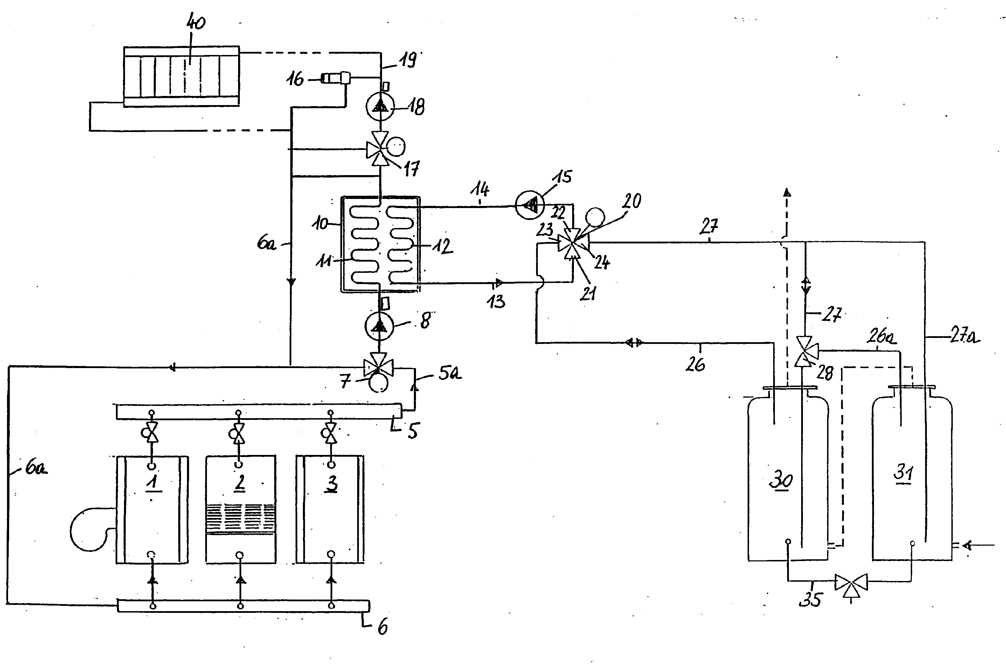

Der Gegenstand der Erfindung ist nachstehend anhand eines in der Zeichnung dargestellten Ausführungsbeispiels näher erläutert. Die Zeichnung zeigt eine schematische Darstellung einer erfindungsgemäßen Heizungsanordnung.

Diese Heizungsanordnung weist einen durch Öl oder Gas betriebenen ersten Heizungskessel 1, eine Wärmepumpe 2 und einen durch einen Feststoff betriebenen zweiten Heizungskessel 3 auf. Die Vorlaufleitungen der Heizungskessel 1 und 3 bzw. der Wärmepumpe 2 sind an eine Vorlaufsammlerleitung 5 geführt. Die Rücklaufleitungen der Heizungskessel 1 und 3 bzw. der Wärmepumpe 2 gehen von einer Rücklaufsammlerleitung 6 ab. Die von der Vorlaufsammlerleitung 5 ausgehende Leitung 5a führt zu einem ersten motorisch betriebenen Mischventil 7, über eine Pumpe 8 zu einem ersten Zweig 11 eines Wärmetauschers 10. Dieser erste Zweig 11 führt zu einem zweiten motorisch betriebenen Mischventil 17 und zu einer zweiten Pumpe 18. Mittels dieser Pumpe wird das erhitzte Trägermedium über eine Leitung 19 zu einer beliebigen Anzahl von Verbrauchern 40 gefördert.

Über die Rücklaufleitung 6a gelangt das Trägermedium zur Rücklaufsammlerleiste 6. Die Mischventile 7 und 17 sind als Dreiwegeventile oder Vierwegeventile ausgebildet, wobei einer der Anschlüsse mit der Rücklaufleitung 6a verbunden ist. Ein weiterer Anschluß zur Rücklaufleitung befindet sich am Ausgang des ersten Zweiges 11 des Wärmetauschers 10. Schließlich ist parallel zu den Verbrauchern ein Überströmventil 16 angeordnet.

Der zweite Zweig 12 des Wärmetauschers 10 ist über Leitungen 13 und 14 an zwei Anschlüsse 21 und 22 eines motorisch gesteuerten Vierwegeventils 20 angelegt. In diesem Kreis befindet sich weiters eine Pumpe 15. Die beiden anderen Anschlüsse 23 und 24 des Vierwegeventils 20 sind über Leitungen 26 und 27 zu mindestens einem Boiler 30 geführt. Dabei mündet die Leitung 28 im oberen Bereich des Boilers 30, wogegen die andere Leitung 27 im unteren Bereich des Boilers 30 mündet. Soferne anstelle eines einzigen Boilers auch ein zweiter Boiler 31 vorgesehen ist, sind weiters Anschlußleitungen 28a, 27a vorgesehen, die ebenfalls in der vorstehend erläuterten Art angeordnet sind bzw. im Boiler 31 münden, wobei die Leitung 26a an die Leitung 27 über ein weiteres Dreiwegeventil 28 angeschlossen ist. Schließlich sind die beiden Boiler 30 und 31 mit Anschlüssen 35 einer Solarquelle ausgebildet.

Die Funktion dieser Heizungsanordnung ist wie folgt: Von einem der beiden Heizungskessel 1 und 3 bzw. von der Wärmepumpe 2 wird mittels der Pumpen 8 und 18 heißes Trägermedium über die Vorlaufsammlerleiste 5, die Vorlaufleitung 5a, das Mischventil 7, den ersten Zweig 11 des Wärmetauschers 10 und über die Leitung 19 den Verbrauchern 40 zugeführt und gelangt in abgekühltem Zustand über die Rücklaufleitung 6a und die Rücklaufsammlerleiste 6 wieder zu den Heizkesseln 1 und 3 bzw. zur Wärmepumpe 2 zurück. Soferne sich in den Boilern 30 und 31 nur kaltes Wasser befindet, wird das Vierwegventil 20 so umgeschaltet, daß vom zweiten Zweig 12 des Wärmetauschers 10 über die Leitung 13 heißes Wasser an den Anschluß 21 gelangt und über den Anschluß 23 sowie die Leitung 26 in den Boiler 30 bzw. 31 geführt wird. Demgegenüber wird mittels der Pumpe 15 kaltes Wasser aus dem unteren Bereich des Boilers 30, 31 über die Leitung 27 über den Anschluß 24 des Vierwegeventils 20 zum Anschluß 22 geführt und zum zweiten Zweig 12 des Wärmetauschers 10 gefördert. In dieser Weise wird der Boiler 30 mit heißem Wasser gefüllt. Analoge Sachverhalte gelten auch für den zweiten Boiler 31.

Sobald jedoch die Heizungskessel 1 und 3 bzw. die Wärmepumpe abgeschaltet wurden und in weiterer Folge von den Verbrauchern 40 Wärmeenergie angefordert wird, wird das Vierwegeventil 20 derart umgeschaltet, daß heißes Wasser aus dem Boiler 30 über die Leitung 26 entnommen wird, wobei es dem Anschluß 23 des Vierwegeventiles 20 zugeführt und vom Anschluß 22 abgegeben wird sowie über die Leitung 14 zum zweiten Zweig 12 des Wärmetauschers 10 geführt wird. Im Wärmetauscher 10 wird das im Heizungskreis befindliche Trägermedium erwärmt. Das abgekühlte Wasser des zweiten Zweiges 12 des Wärmetauschers 10 strömt über die Leitung 13 zum Anschluß 21 des Ventils 20 zurück und gelangt über den Anschluß 24 und über die Leitung 27 in den Boiler 30.

Da sich die Mündungen der Leitungen 26 und 27 einerseits im oberen Bereich und andererseits im unteren Bereich des Boilers 30 befinden, ist gewährleistet, daß das gesamte im Boiler 30 befindliche heiße Wasser aus diesem entnommen und zur Speisung des Heizungskreises herangezogen werden kann. Zudem wird hiedurch sichergestellt, daß der Boiler 30 auch bei Betrieb der Wärmepumpe 2 periodisch über 55°C aufgeheizt wird, und ein periodischer Austausch des im Boiler 30 befindlichen Heißwassers erfolgt, wodurch die Entwicklung von Bakterien verhindert wird. Gleiches gilt auch für den allenfalls vorgesehenen Boiler 31.

Alternativ zur geschilderten Ausbildung kann anstelle des Vierwegeventils 20 in der Leitung 14 parallel zur Pumpe 15 eine in entgegengesetzter Richtung fördernde Pumpe angeordnet sein oder kann die Pumpe 15 in ihrer Förderrichtung umkehrbar sein, wobei dann die Leitungen 13 und 14 direkt im unteren und im oberen Bereich des Boilers 30 münden. Je nachdem, in welcher Weise die mindestens eine Pumpe betrieben wird, kann der mindestens eine Boiler 30 mit Heißwasser gespeist werden oder kann aus diesem Heißwasser entnommen werden.

## Patentansprüche

1. Heizungsanordnung mit mindestens einer Heizvorrichtung für ein Trägermedium, z.B. einem durch Öl oder Gas betriebenen Heizungskessel, einer Wärmepumpe oder einem Feststoffbrenner, weiters mit einer Förderpumpe für das Trägermedium, mit einem Wärmetauscher, mit im Heizungskreis angeordneten Verbrauchern, wie Heizungsradiatoren, und mit mindestens einem Boiler für Brauchwasser, welcher mittels des Warmetauschers aufheizbar ist, wobei sich einer der Leitungszweige des Wärmetauschers im Kreislauf der Heizvorrichtung befindet, dadurch gekennzeichnet, daß sich der andere Leitungszweig (12) im Boilerkreislauf befindet, wobei dessen beiden Leitungen (26, 27) einerseits im oberen und andererseits im unteren Bereich des Boilers (30) münden und wobei vorzugsweise in diesem Leitungszweig (12) ein Umsteuerventil (20) vorgesehen ist.

2. Heizungsanordnung nach Anspruch 1, dadurch gekennzeichnet, daß im Boilerkreislauf eine weitere Förderpumpe (15) vorgesehen ist.

3. Heizungsanordnung nach einem der Ansprüche 1 und 2, dadurch gekennzeichnet, daß im Boilerkreis ein Umsteuerventil vorgesehen ist, welches als Vierwegventil (20) ausgebildet ist und an welches einerseits die zum zweiten Leitungszweig des Wärmetauschers (10) und andererseits die zum Boiler (30) führenden Leitungen (13, 14, 26, 27) angeschlossen sind.

4. Heizungsanordnung nach einem der Ansprüche 1 bis 3, dadurch gekennzeichnet, daß sich im Boilerkreislauf zwei über ein weiteres Umsteuerventil (28) miteinander verbundene Boiler (30, 31) befinden.

5. Heizungsanordnung nach einem der Ansprüche 1 bis 4, dadurch gekennzeichnet, daß der mindestens eine Boiler (30) in an sich bekannter Weise mittels mindestens einer weiteren Wärmequelle (35) aufheizbar ist.

6. Heizungseinrichtung nach einem der Ansprüche 1 bis 5, dadurch gekennzeichnet, daß die Heizvorrichtung durch die Kombination eines Öl-bzw. Gasbrenners (1) mit einer Wärmepumpe (2) und einem Feststoffbrenner (3) ausgebildet ist, deren Vorläufe und Rückläufe an eine Vorlaufsammlerleitung (5) und an eine Rücklaufsammlerleitung (6) angeschlossen sind.

7. Heizungsvorrichtung nach einem der Ansprüche 1 bis 6, dadurch gekennzeichnet, daß sich in der Vorlaufleitung (5a) vor und nach dem Wärmetauscher (10) vorzugsweise motorisch gesteuerte Mehrwegventile (7, 17) befinden, von welchen jeweils ein Anschluß mit der Rücklaufleitung (6a) verbunden ist.

## Claims

1. A heating arrangement comprising at least one heating device for a carrier medium, e.g. a heating boiler operated by oil or gas, a heat pump or a solid fuel burner, and additionally comprising a feed pump for the carrier medium, a heat exchanger, consuming points, such as heating radiators, arranged in the heating circuit and at least one boiler for water for domestic use, which can be heated by means of the heat exchanger, one of the arms of the heat exchanger being located in the heating device circuit, characterized in that the other arm (12) is located in the boiler circuit, the two lines (26, 27) thereof opening on the one hand in the upper and on the other hand in the lower area of the boiler (30) and a reverse valve (20) preferably being provided in this arm (12).

2. A heating arrangement according to claim 1, characterized in that a further feed pump (15) is provided in the boiler circuit.

3. A heating arrangement according to either one of claims 1 and 2, characterized in that a reverse valve is provided in the boiler circuit, which reverse valve is constructed as a four-way valve (20) and to which there are connected the lines (13, 14, 26, 27) leading on the one hand to the second arm of the heat exchanger (10) and on the other hand to the boiler (30).

4. A heating arrangement according to any one of claims 1 to 3, characterized in that two boilers (30, 31) connected to each other via a further reverse valve (28) are located in the boiler circuit.

5. A heating arrangement according to any one of claims 1 to 4, characterized in that the at least one boiler (30) can be heated in a manner known per se by means of at least one further heat source (35).

6. A heating arrangement according to any one of claims 1 to 5, characterized in that the heating device is constructed by the combination of an oil or gas burner (1) with a heat pump (2) and a solid fuel burner (3), whose forward and return flow pipes are connected to a forward collecting pipe (5) and a return collecting pipe (6).

7. A heating arrangement according to any one of claims 1 to 6, characterized in that preferably motor-driven multiple way valves (7, 17) are located in the forward flow pipe (5a) upstream and downstream of the heat exchanger (10), one of the connections of each of said valves (7, 17) being connected with the return flow pipe (6a).

**Revendications**

1. Installation de chauffage comportant au moins un dispositif de chauffage pour un fluide caloporteur, par exemple une chaudière de chauffage fonctionnant au mazout ou au gaz, une pompe à chaleur ou un brûleur à combustible solide, comportant en outre une pompe de circulation pour le fluide caloporteur, comportant un échangeur de chaleur, comportant des récepteurs montés dans le circuit de chauffage tels que des radiateurs et comportant au moins un chauffe-eau pour l'eau sanitaire, qui peut être chauffé au moyen de l'échangeur de chaleur, l'une des branches de la tuyauterie de l'échangeur de chaleur se trouvant dans le circuit du dispositif de chauffage, caractérisée en ce que l'autre branche de tuyauterie (12) se trouve dans le circuit du chauffe-eau, ces deux tuyauteries (26, 27) débouchant d'une part dans la zone supérieure et d'autre part dans la zone inférieure du chauffe-eau (30) et une vanne de commutation (20) étant de préférence prévue dans cette branche de tuyauterie (12).

2. Installation de chauffage selon la revendication 1, caractérisée en ce qu'il est prévu une autre pompe de circulation (15) dans le circuit du chauffe-eau.

3. Installation de chauffage selon l'une des revendications 1 et 2, caractérisée en ce qu'il est prévu dans le circuit du chauffe-eau une vanne de commutation qui est conçue sous la forme d'une vanne à quatre voies (20) et à laquelle sont raccordées d'une part les tuyauteries (13, 14, 26, 27) menant à la seconde branche de la tuyauterie de l'échangeur de chaleur (10) et d'autre part au chauffe-eau (30).

4. Installation de chauffage selon l'une des revendications 1 à 3, caractérisée en ce que deux chauffe-eau (30, 31), reliés entre eux par une autre vanne de commutation (28), se trouvent dans le circuit du chauffe-eau.

5. Installation de chauffage selon l'une des revendications 1 à 4, caractérisée en ce qu'un chauffe-eau (30) au moins peut être chauffé, de manière connue en soi, au moyen d'au moins une autre source de chaleur (35).

6. Equipement de chauffage selon l'une des revendications 1 à 5, caractérisé en ce que le dispositif de chauffage est constitué par l'association d'un brûleur à mazout ou à gaz (1) avec une pompe à chaleur (2) et un brûleur à combustible solide (3) dont les circuits d'aller et de retour sont raccordés à un collecteur aller (5) et un collecteur retour (6).

7. Dispositif de chauffage selon l'une des revendications 1 à 6, caractérisé en ce que dans la conduite aller (5a) se trouvent, en amont et en aval de l'échangeur de chaleur (10), des vannes à plusieurs voies (7, 17 ), commandées de préférence par un moteur, dont un raccord est relié à la conduite retour (6a).

EP 0 330 648 B1